# EUROPEAN PATENT APPLICATION

(11) **EP 2 733 776 A1**
(43) Date of publication of application: **21.05.2014**
(21) Application number: 12811641.5
(22) Date of filing: 12.07.2012
(51) Int. Cl.: H01M 4/505, H01M 4/36, H01M 4/525, H01M 10/052

(54) **NONAQUEOUS ELECTROLYTE SECONDARY BATTERY**

(30) Priority: 13.07.2011 JP 2011155124
(71) Applicant: GS Yuasa International Ltd., Kyoto-shi, Kyoto 601-8520 (JP)
(72) Inventor: TSUCHIKAWA, Tomoya, Kyoto 601-8520 (JP); KITANO, Shinya, Kyoto 601-8520 (JP); HASEGAWA, Hidefumi, Kyoto 601-8520 (JP); ANAMI, Keisuke, Kyoto 601-8520 (JP); UEBO, Yasushi, Kyoto 601-8520 (JP)
(74) Representative: Isarpatent
(86) International application number: PCT/JP2012/004532
(87) International publication number: WO 2013/008475

(57) **Abstract**

The nonaqueous electrolyte secondary battery according to the invention includes: a positive electrode containing a Mn-based active material having an average particle size of 12 µm or more and 30 µm or less, which is represented by a general formula LiₐMn₂-_{b}AbO₄ and a three-component active material having an average particle size of 0.5 µm or more and 7 µm or less, which is represented by a general formula Li_{d}NiₓCo_{y}Mn_{z}M_{α}O₂; and a negative electrode containing 50 mass% or more of a negative active material having an average particle size of 3 µm or more and 18 µm or less, and the mass mixing ratio between the Mn-based active material and the three-component active material meets the mass of the Mn-based active material : the mass of the three-component active material = 20 : 80 to 80 : 20. Thus, even when the battery causes internal short circuit, it is possible to adequately keep the battery from falling into any abnormal condition.

## Description

### TECHNICAL FIELD

This invention relates to a nonaqueous electrolyte secondary battery.

### BACKGROUND ART

Conventionally, nonaqueous electrolyte secondary batteries are known which include a positive electrode with two types of positive active materials mixed and a negative electrode. Patent Document 1 discloses a positive electrode containing a positive active material composed of a mixture of LiMn₂O₄ and LiNi_{1/3}Co_{1/3}Mn_{1/3}O₂, and demonstrates that it is possible to improve the energy density of a battery by mixing LiMn₂O₄ and Li(Ni-Co-Mn)O₂.

### PRIOR ART DOCUMENTS

### PATENT DOCUMENTS

Patent Document 1: JP-A-2008-532221

### SUMMARY OF THE INVENTION

### PROBLEMS TO BE SOLVED BY THE INVENTION

However, the battery using Li(Ni-Co-Mn)O₂ is disadvantageous that when internal short circuit is caused between the positive electrode and negative electrode of the battery from any cause, thermal runaway is likely to be caused in the case of heat generation around the short-circuited portion of the battery due to a short-circuit current flowing through the short-circuited portion.

As a result of verification by the inventors of the present application, mixing LiMn₂O₄ and Li(Ni-Co-Mn)O₂ as in Patent Document 1 is effective for suppressing the thermal runaway to some extent, but insufficient for suppressing abnormality of the battery.

This invention has been achieved in order to solve the problem described above, and an object of this invention is to provide a nonaqueous electrolyte secondary battery which is able to adequately keep the battery from falling into any abnormal condition, even when the battery causes internal short circuit.

### MEANS FOR SOLVING THE PROBLEMS AND ADVANTAGES OF THE INVENTION

As a result of earnest studies carried out by the inventors of the present application, it has been found that the use of a specific positive electrode and negative electrode is able to adequately suppress abnormality in the battery. More specifically, a nonaqueous electrolyte secondary battery according to an aspect of this invention includes: a positive electrode containing a first positive active material having an average particle size of 12 µm or more and 30 µm or less, which is represented by a general formula LiₐMn₂-_{b}A_{b}O₄ (A is at least one element selected from the group consisting of the elements of Groups 2 to 15 in the periodic table of the elements; 0.9 ≤ a ≤ 1.3; 0 ≤ b ≤ 0.3), and a second positive active material having an average particle size of 0.5 µm or more and 7 µm or less, which is represented by a general formula Li_{d}NiₓCo_{y}Mn_{z}M_{α}O₂ (M is at least one element selected from the group consisting of the elements of Groups 2 to 15 in the periodic table of the elements; 0.9 ≤ d ≤ 1.3; x, y, z, and α respectively meets 0 < x < 1, 0 < y < 1, 0 < z < 1, 0 ≤ α ≤ 0.3; x + y + z + α = 1); and a negative electrode containing 50 mass% or more of a negative active material having an average particle size of 3 µm or more and 18 µm or less to the total mass of the negative active material. The mass mixing ratio between the first positive active material and the second positive active material meets the mass of the first positive active material : the mass of the second positive active material = 20 : 80 to 80 : 20.

The above-mentioned configuration of the nonaqueous electrolyte secondary battery according to the aspect of this invention can adequately keep the battery from falling into any abnormal condition, even when the battery causes internal short circuit.

In the nonaqueous electrolyte secondary battery according to the aspect, the negative electrode preferably contains less than 50 mass% of a negative active material larger than 18 µm in average particle size to the total mass of the negative active material, in addition to the negative active material of 3 µm or more and 18 µm or less in average particle size. This configuration can make the life of the battery longer, in addition to the ability to keep the battery from falling into any abnormal condition in the case of internal short circuit caused between the positive electrode and negative electrode of the battery.

In the nonaqueous electrolyte secondary battery according to the aspect, the specific surface area of the second positive active material is preferably 3.5 times or more as high as the specific surface area of the first positive active material. This configuration can keep the battery from falling into any abnormal condition with more certainty.

### BRIEF DESCRIPTION OF THE DRAWINGS

Fig. 1 is an exploded perspective view illustrating the general configuration of a battery according to an embodiment of the present invention.
Fig. 2 is a cross-sectional view illustrating the internal structure of the battery along line 200-200 of Fig. 1.

### MODE FOR CARRYING OUT THE INVENTION

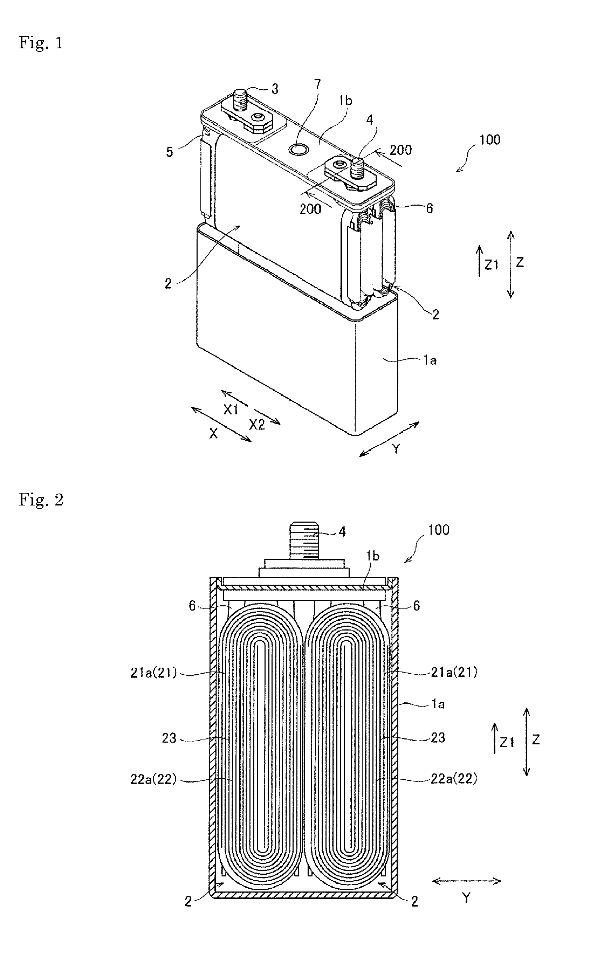

A specific embodiment of the present invention will be described below on the basis of the drawings. First, the configuration of a battery 100 according to an embodiment of the present invention will be described with reference to Figs. 1 and 2. It is to be noted that the battery 100 is an example of the "nonaqueous electrolyte secondary battery" according to the present invention.

The battery 100 according to the embodiment of the present invention is a prismatic lithium ion battery. This battery 100 includes, as shown in Fig. 1, a cuboid battery case 1a opened at the upper surface, a lid part 1b, and power generating elements 2. The battery 100 is sealed by circumferentially welding the lid part 1b along an opening edge of the battery case 1a.

In addition, the two power generating elements 2 are arranged in parallel connection as shown in Figs. 1 and 2. In addition, the battery 100 is provided with a positive electrode terminal 3 and a negative electrode terminal 4 which project upward from the lid part 1b, as shown in Fig. 1. In addition, the battery 100 includes positive electrode current collecting terminals 5 and negative electrode current collecting terminals 6 respectively for electrically connecting the positive electrode terminal 3 and the negative electrode terminal 4 to the power generating elements 2.

In addition, the substantially central part of the lid part 1b is provided with a safety valve 7. The safety valve 7 has the function of allowing the gas, etc. in the battery case 1a to escape to the outside to reduce the internal pressure of the battery case 1a, with the valve opened when the internal pressure of the battery case 1a is increased for any reason.

In the present embodiment herein, the positive electrode contains a mixture obtained by mixing a first positive active material (hereinafter, referred to as a "Mn-based active material") represented by the general formula LiₐMn₂-_{b}A_{b}O₄ (A is at least one element selected from the group consisting of the elements of Groups 2 to 15 in the periodic table of the elements; 0.9 ≤ a ≤ 1.3; 0 ≤ b ≤ 0.3), and a second positive active material (hereinafter, referred to as a "three-component active material") represented by the general formula Li_{d}NiₓCo_{y}Mn_{z}M_{α}O₂ (M is at least one element selected from the group consisting of the elements of Groups 2 to 15 in the periodic table of the elements; 0.9 ≤ d ≤ 1.3; x, y, z, and a respectively meets 0 <x < 1, 0 < y < 1, 0 < z < 1, 0 < α < 0.3; x + y + z + α = 1).

It is to be noted that A in the general formula LiₐMn₂-_{b}A_{b}O₄ is preferably at least any one of Ti, V, Cr, Fe, Co, Ni, Cu, Zn, B, P, Mg, and Al. Further, M in the general formula Li_{d}NiₓCo_{y}Mn_{z}M_{α}O₂ is preferably at least any one of Ti, V, Cr, Fe, Cu, Zn, B, P, Mg, Al, Ca, Zr, Mo, and W.

In addition, the positive electrode has a Mn-based active material and a three-component active material mixed at a mass ratio of Mn-based active material : a three-component active material = 20 : 80 to 80 : 20.

In addition, in the present embodiment, the Mn-based active material is 12 µm or more and 30 µm or less in average particle size, whereas the three-component active material is 0.5 µm or more and 7 µm or less in average particle size. More specifically, the average particle size of the Mn-based active material is about 5 µm or more larger than the average particle size of the three-component active material. The specific surface area of the Mn-based active material is preferably about 0.4 m²/g or less, and the specific surface area of the three-component active material is about 3.5 times or more larger than the specific surface area of the Mn-based active material, and about 5.0 m²/g or less.

A conducting agent, a binder, and the like may be contained in the positive composite. Electron-conductive materials such as acetylene black are preferred as the conducting agent. It is possible to use, as the binder, one of, or two or more of polyvinylidene fluoride (PVDF), styrene-butadiene rubber (SBR), carboxymethyl cellulose (CMC), and the like.

Furthermore, in the present embodiment, the negative electrode contains at least 50 mass% or more of negative active material that is 3 µm or more and 18 µm or less in average particle size. For the negative active material of 3 µm or more and 18 µm or less in average particle size, a mixture of two or more negative active materials may be used as long as the average particle size falls within the range. It is to be noted that the negative active material is more preferably about 5 µm or more and about 15 µm or less in average particle size. Furthermore, the negative electrode preferably contains less than about 50 mass% of negative active material that is more than about 18 µm in average particle size, in addition to the negative active material of 3 µm or more and 18 µm or less in average particle size.

The negative active material has only to be able to store lithium ions. It is possible to use, for example, lithium composite oxides, silicon oxides, alloys which are able to store and release lithium, and carbon materials such as graphite, hard carbon, low-temperature fired carbon, and amorphous carbon. It is to be noted that graphite is preferably used for the negative active material from the viewpoint of energy density.

If necessary, a conducting agent, a binder, and the like may be contained in the negative composite, as in the case of the positive composite. It is possible to use, for the conducting agent and the binder, the same material as the positive composite mentioned above.

As separators 23 of the power generating elements 2, resin porous membranes, non-woven fabrics, and the like may be used singularly, or used in combination. It is to be noted that, from the standpoint of high workability and improvement in durability, polyolefin porous membranes such as polyethylene and polypropylene are more preferably used for the separator 23.

An electrolyte salt dissolved in a nonaqueous solvent is used as a nonaqueous electrolyte. It is possible to use, as the electrolyte salt, inorganic ionic salts containing Li, such as LiClO₄, LiBF₄, and LiPF₆. In addition, the concentration of the electrolyte salt in the nonaqueous electrolyte is preferably about 0.1 mol/l or more and about 5 mol/l or less.

It is possible to use, as the non-aqueous solvent of the nonaqueous electrolyte, cyclic carbonates such as propylene carbonate (PC) and ethylene carbonate (EC), and chain carbonates such as dimethyl carbonate (DMC), diethyl carbonate (DEC), and ethylmethyl carbonate (EMC).

### EXAMPLES

The preparation of the battery 100 according to the embodiment and the evaluation test method therefor will be described in Examples 1 to 5 below.

### [Example 1]

### (Example 1-1)

### (Preparation of Mn-based Active Material)

First, the Mn-based active material was prepared. Specifically, a solution of LiOH and MnO₂ mixed at a predetermined ratio is dried by using spray drying to obtain a precursor composed of a mixed salt of Li and Mn. The precursor is subjected to calcination to prepare a Mn-based active material composed of LiMn₂O₄ of spinel-type crystal structure, which was 18 µm in average particle size and 0.2 m²/g in specific surface area.

It is to be noted that the average particle size of the Mn-based active material was measured as follows. First, the prepared Mn-based active material and an anionic surfactant were mixed sufficiently, and ion-exchange water (water obtained by removing ions in water with the use of an ion-exchange resin) was then added to the mixture. After dispersing the Mn-based active material in the ion-exchange water with the use of ultrasonic, the average particle size of the Mn-based active material was measured with the use of a laser diffraction scattering-type particle size distribution measurement system (SALD-2000J from Shimadzu Corporation).

The specific surface area of the Mn-based active material was measured as follows. First, the prepared Mn-based active material was dried in a nitrogen gas atmosphere under a temperature condition of 150°C. Then, the specific surface area of the Mn-based active material on the basis of the BET method was measured with the use of a specific surface area measurement system (TRISTAR 3000 from Micromeritics).

### (Preparation of Three-Component Active Material)

With a manganese sulfate hydrate, a nickel sulfate hydrate, and a cobalt sulfate hydrate as raw materials, a Ni-Co-Mn coprecipitated precursor was obtained by a coprecipitation method.

Then, a predetermined amount of lithium hydroxide and the Ni-Mn-Co coprecipitated precursor were mixed. The mixture was subjected to calcination to prepare a three-component active material composed of LiNi_{1/3}Co_{1/3}Mn_{1/3}O₂ of layered rock salt type crystal structure, which was 4 µm in average particle size and 1.4 m²/g in specific surface area. It is to be noted that the average particle size and specific surface area of the three-component active material were measured by using the same measurement methods as in the measurement of the average particle size and specific surface area of the Mn-based active material. As a result, the specific surface area of the three-component active material was 7 times (1.4/0.2) as high as the specific surface area of the Mn-based active material.

With respect to both the Mn-based active material and the three-component active material, the adjustments of the calcination temperature, calcination time, etc. for the calcination and the classification of particles make it possible to prepare a positive active material with a predetermined average particle size and specific surface area. In general, a positive active material that is larger in average particle size and lower in specific surface area is able to be prepared by making the calcination temperature higher and the calcination time longer. On the other hand, active material that is smaller in average particle size and higher in specific surface area is able to be prepared by making the calcination temperature lower and the calcination time shorter.

### (Preparation of Positive Electrode)

The Mn-based active material and the three-component active material were used to prepare a positive composite. Specifically, mixed were a positive active material composed of a mixture of LiMn₂O₄ and LiNi_{1/3}Co_{1/3}Mn_{1/3}O₂ mixed at a mass ratio of 70 : 30, a conducting agent composed of acetylene black (AB), and a thickening agent composed of polyvinylidene fluoride (PVDF). In this case, the mass ratio was adjusted to positive active material : AB: PVDF = 88 : 6 : 6. To this mixture, an appropriate amount of N-methylpyrrolidon (NMP) was added to prepare a paste-like positive composite.

Then, as shown in Fig. 2, the prepared paste-like positive composite was applied to positive electrode current collectors 21a of aluminum foil with a thickness of about 20 µm, and dried. Thereafter, the positive electrode current collecting terminals 5 (see Fig. 1) were connected to the vicinity of sides of the positive electrode current collectors 21a.

### (Preparation of Negative Active Material)

Next, a negative active material was prepared. Specifically, graphite was subjected to grinding and classification to prepare a first graphite (Gr1) of 5 µm in average particle size and 2.2 m²/g in specific surface area as a first negative active material, and prepare a second graphite (Gr2) of 22 µm in average particle size and 0.8 m²/g in specific surface area as a second negative active material. It is to be noted that the same measurement methods as in the measurement of the average particle size and specific surface area of the Mn-based positive active material were used for the measurement of the average particle sizes and specific surface areas of both the first graphite and second graphite.

### (Preparation of Negative Electrode)

The first graphite and second graphite prepared as described above were used to prepare a negative composite. Specifically, mixed were a negative active material composed of a mixture of the first graphite and second graphite mixed at a mass ratio of 60 : 40, and a binder composed of PVDF. In this case, the mass ratio was adjusted to negative active material : PVDF = 95 : 5. Then, to this mixture, an appropriate amount of NMP was added to prepare a paste-like negative composite. Then, the negative composite was applied to negative electrode current collectors 22a of copper foil with a thickness of about 15 µm by the same method as for the positive electrode to prepare negative electrodes 22, and the negative electrodes 22 were connected to the negative electrode current collector terminals 6.

### (Preparation of Battery without Electrolyte Solution Filling)

Thereafter, the separators 23 interposed between the positive electrodes 21 and the negative electrodes 22 were rolled up to prepare power generating elements 2 (see Fig. 2). Then, as shown in Fig. 1, the positive electrode terminal 3 was joined to the positive electrode current collecting terminals 5, whereas the negative electrode terminal 4 was connected to the negative electrode current collecting terminals 6. Thereafter, the joint between the battery case 1a and the lid part 1b was welded by laser welding. In this way, prepared was the battery 100 before injecting a nonaqueous electrolyte.

### (Preparation of Nonaqueous Electrolyte and Electrolyte Solution Filling)

Further, ethylene carbonate (EC) and diethyl carbonate (DEC) were mixed at a volume ratio of 1 : 1 to prepare a non-aqueous solvent. Then, a nonaqueous electrolyte was prepared by dissolving LiPF₆ in the prepared nonaqueous solvent so that the concentration of the electrolyte salt was 1 mol/L. Then, the prepared nonaqueous electrolyte was injected from an electrolyte solution filling port, not shown, at a side surface of the battery case 1a. Finally, the electrolyte solution filling port was sealed to prepare the battery 100 according to Example 1-1 as shown in Fig. 1.

### (Examples 1-2 to 1-8 and Comparative Examples 1-1 to 1-7)

In Examples 1-2 to 1-8 and Comparative Examples 1-1 to 1-7, batteries were prepared in the same way as in Example 1-1, except for the average particle sizes and specific surface areas of LiNi_{1/3}Co_{1/3}Mn_{1/3}O₂ and LiMn₂O₄, the average particle size and specific surface area of the first graphite, or the mixture ratio between the first graphite and the second graphite as shown in Table 1.

### (Nailing Test)

Constant current constant voltage charge was carried out up to a voltage of 4.1 V at a charge current of 50 A for each of the prepared batteries according to Examples 1-1 to 1-8 and Comparative Examples 1-1 to 1-7. In this case, the charge time was adjusted to 3 hours in total.

An iron nail of 5 mm in diameter was passed through the charged battery at a speed of 3 cm/sec from one side surface in the Y direction (the direction of stacking the positive electrode 21 and negative electrode 22 in the power generating element 2) of the battery shown in Fig. 1 to force the positive electrode 21 and negative electrode 22 of the battery to be short-circuited. It is to be noted that the nailing test is an evaluation test for the batteries, and such extreme short circuit will not be caused in normal usage environments.

Then, whether or not there is any abnormality was observed for each battery. In this case, it was determined that there was "abnormality", when obvious abnormality was observed, such as when the safety valve 7 of the battery was opened to blow out white smoke from the safety valve, or when the battery case 1a and the lid part 1b were broken. It was determined that there was "no abnormality", when the safety valve 7 was not opened, or when obvious abnormality was not observed even in the case of the safety valve 7 opened. Furthermore, it was determined that there was "no abnormality (without opening the valve, with 5% or more decrease in weight)" when liquid leakage occurred from the battery case 1a or the like to reach 5% or more as the rate of decrease in weight (mass) to the total weight (total mass) of the battery, while the safety valve 7 was not opened without any particular problems practically.

Table 1 shows the results of the nailing test for the batteries 100 according to Examples 1-1 to 1-8 and the batteries according to Comparative Examples 1-1 to 1-7.

**[Table 1]**

| | Positive Active Material | | | | | Negative Active Material | | | Result of Nailing Test |
|---|---|---|---|---|---|---|---|---|---|
| | Mn Based | | Three Component | | Ratio of Specific Surface Area (Three-Component/ Mn-Based) | Gr1 | | Gr1:Gr2 (Mass Ratio) | |
| | Average Particle Size (µm) | Specific Surface Area (m²/g) | Average Particle Size (µm) | Specific Surface Area (m²/g) | | Average Particle Size (µm) | Specific Surface Area (m²/g) | | |
| Example 1-1 | 18 | 0.2 | 4 | 1.4 | 7.0 | 5 | 2.2 | 60:40 | No Abnormality |
| Example 1-2 | 18 | 0.2 | 7 | 1.0 | 5.0 | 15 | 4.1 | 60:40 | No Abnormality |
| Example 1-3 | 18 | 0.2 | 0.5 | 5.0 | 25.0 | 5 | 2.2 | 60:40 | No Abnormality |
| Example 1-4 | 18 | 0.2 | 2 | 2.3 | 11.5 | 5 | 2.2 | 60:40 | No Abnormality |
| Example 1-5 | 20 | 0.2 | 4 | 1.4 | 7.0 | 5 | 2.2 | 60:40 | No Abnormality |
| Example 1-6 | 30 | 0.2 | 4 | 1.4 | 7.0 | 5 | 2.2 | 60:40 | No Abnormality |
| Example 1-7 | 12 | 0.3 | 4 | 1.4 | 4.7 | 5 | 2.2 | 60:40 | No Abnormality |
| Example 1-8 | 18 | 0.2 | 4 | 1.4 | 7.0 | 5 | 2.2 | 50:50 | No Abnormality |
| Comparative Example 1-1 | 15 | 0.3 | 12 | 1.0 | 3.3 | 32 | 2.2 | 60:40 | Abnormality |
| Comparative Example 1-2 | 18 | 0.2 | 10 | 0.6 | 3.0 | 5 | 2.2 | 60:40 | Abnormality |
| Comparative Example 1-3 | 18 | 0.2 | 7.5 | 0.6 | 3.0 | 5 | 2.2 | 60:40 | Abnormality |
| Comparative Example 1-4 | 10 | 0.5 | 4 | 1.4 | 2.8 | 5 | 2.2 | 60:40 | Abnormality |
| Comparative Example 1-5 | 30 | 0.2 | 10 | 0.6 | 3.0 | 5 | 2.2 | 60:40 | Abnormality |
| Comparative Example 1-6 | 18 | 0.2 | 4 | 1.4 | 7.0 | 5 | 2.2 | 40:60 | Abnormality |
| Comparative Example 1-7 | 18 | 0.2 | 4 | 1.4 | 7.0 | 32 | 2.2 | 60:40 | Abnormality |

| | | | | | | | | | |
|---|---|---|---|---|---|---|---|---|---|
| (1) Mn-based composition: LiMn₂O₄, three-component composition: LiNi_{1/3}Co_{1/3}Mn_{1/3}O₂ (2) Mn Based : Three Component = 70 : 30 (Mass Ratio) (3) Gr2 of 22 µm in average particle size and 0.8 m²/g in specific surface area | | | | | | | | | |

As shown in Table 1 above, Examples 1-1 to 1-8 produced the result of "no abnormality". On the other hand, Comparative Examples 1-1 to 1-7 produced the result of "abnormality".

In considering the results mentioned above, it is believed that the three-component active material succeeded in more preferentially receiving lithium ions than the Mn-based active material by making the average particle size of the three-component active material likely to cause thermal runaway substantially smaller than the average particle size of the Mn-based active material in Examples 1-1 to 1-8. In addition, it is believed that the use of 50 mass% or more of the first graphite of 3 µm or more and 18 µm or less in average particle size succeeded in bringing the first graphite and the nonaqueous electrolyte effectively into contact with each other, and promoting the release of lithium ions from the first graphite.

Thus, it is believed that the battery succeeded in being rapidly discharged to a charging condition without any thermal runaway caused by the three-component active material around the short-circuited portion, and thus succeeded in adequately keeping the battery from falling into any abnormal condition.

In contrast, the reason why abnormality was observed when the average particle size of the Mn-based active material was less than 12 µm (Comparative Examples 1 to 4) is believed to be because the three-component active material failed to more preferentially receive electrons from the negative electrode side and lithium ions than the Mn-based active material, due to the fact that the Mn-based active material was not substantially larger in particle size than the three-component active material. In addition, when the average particle size of the Mn-based active material is larger than 30 µm, the area of contact between the Mn-based active material and the nonaqueous electrolyte is excessively reduced to decrease the discharge capacity in the case of high rate discharge. Therefore, the average particle size of the Mn-based active material is preferably 12 µm or more and 30 µm or less.

The reason why abnormality was observed when the average particle size of the three-component active material was larger than 7 µm (Comparative Examples 1-1 to 1-3 and 1-5) is believed to be because the three-component active material failed to more preferentially receive electrons from the negative electrode side and lithium ions than the Mn-based active material, due to the fact that the three-component active material failed to be efficiently brought into contact with the nonaqueous electrolyte because of the excessively large particle sizes of the three-component active material. In addition, when the average particle size of the three-component active material is less than 0.5 µm, the reactivity between the three-component active material and the nonaqueous electrolyte is unfavorably increased to decrease the life of the battery. Therefore, the average particle size of the three-component positive active material is preferably 0.5 µm or more and 7 µm or less.

In addition, the reason why abnormality occurred when the first graphite was large in average particle size (Comparative Examples 1-1 and 1-7) is considered to be because, due to the large particle sizes of both the first graphite and second graphite, the reactivity between the entire negative active material and the nonaqueous electrolyte was decreased to fail to promote the release of lithium ions. Thus, the average particle size of the first graphite is preferably 15 µm or less as in Examples 1-1 to 1-8. It is to be noted that the inventors of the present application consider that effects similar to those of Examples 1-1 to 1-8 will be produced as long as the average particle size of the first graphite is 18 µm or less. In addition, when the first graphite is less than 3 µm in average particle size, the first graphite is unfavorably excessively reduced in size to excessively increase the reactivity between the first graphite and the nonaqueous electrolyte and decrease the life of the battery. Therefore, the average particle size of the first graphite is preferably 3 µm or more and 18 µm or less.

The reason why abnormality occurred in the case of containing less than 50 mass% of the first graphite (Comparative Example 1-6) is believed to be because the entire negative active material failed to sufficiently increase the reactivity with the nonaqueous electrolyte when the amount of the first graphite is insufficient (less than 50 mass%).

From the results of Examples 1-1 to 1-8, it has been determined that the battery succeeded in being adequately kept from falling into any abnormal condition by ensuring a difference of 8 µm or more between the average particle size of the Mn-based active material and the average particle size of the three-component active material. Further, the inventors of the present application consider that the battery can be adequately kept from falling into any abnormal state as long as the difference in average particle size is ensured to be 5 µm or more.

In addition, as in Examples 1-1 to 1-8, the negative active material is preferably adapted to contain less than 50 mass% of the second graphite which is larger than the first graphite in average particle size. This is because the second graphite which is larger than the first graphite in average particle size is believed to be able to, because of the low reactivity with the nonaqueous electrolyte, make the life of the battery longer.

### [Example 2]

### (Examples 2-1 to 2-4 and Comparative Examples 2-1 to 2-2)

In Examples 2-1 to 2-3, batteries were prepared in the same way as in Example 1-1, except that the positive active material was composed so that the mass ratio between the Mn-based active material and the three-component active material was 20 : 80 to 80 : 20. In Example 2-4, Comparative Example 2-1, and Comparative Example 2-2, batteries were prepared in the same way as in Example 1-1, except that the average particle sizes and specific surface areas for each active material and the mixture ratio of the positive active material were adjusted as shown in Table 2. Table 2 shows the results of the nailing test for the batteries 100 according to Examples 2-1 to 2-4 and the batteries according to Comparative Examples 2-1 to 2-2.

**[Table 2]**

| | Positive Active Material | | | | | | Negative Active Material | | Result of Nailing Test |
|---|---|---|---|---|---|---|---|---|---|
| | Mn Based | | Three Component | | Ratio of Specific Surface Area (Three-Component/ Mn-Based) | Mn Based : Three Component (Mass Ratio) | Gr1 | | |
| | Average Particle Size (µm) | Specific Surface Area (m²/g) | Average Particle Size (µm) | Specific Surface Area (m²/g) | | | Average Particle Size (µm) | Specific Surface Area (m²/g) | |
| Example 2-1 | 18 | 0.2 | 4 | 1.4 | 7.0 | 30:70 | 5 | 2.2 | No Abnormality |
| Example 2-2 | 18 | 0.2 | 4 | 1.4 | 7.0 | 20:80 | 5 | 2.2 | No Abnormality |
| Example 2-3 | 18 | 0.2 | 4 | 1.4 | 7.0 | 80:20 | 5 | 2.2 | No Abnormality |
| Example 2-4 | 18 | 0.2 | 7 | 1.0 | 5.0 | 30:70 | 15 | 4.1 | No Abnormality |
| Comparative Example 2-1 | 15 | 0.3 | 12 | 1.0 | 3.3 | 30:70 | 32 | 2.2 | Abnormality |
| Comparative Example 2-2 | 18 | 0.2 | 4 | 1.4 | 7.0 | 10:90 | 5 | 2.2 | Abnormality |

| | | | | | | | | | |
|---|---|---|---|---|---|---|---|---|---|
| (1) Mn-based composition: LiMn₂O₄, three-component composition: LiNi_{1/3}Co_{1/3}Mn_{1/3}O₂ (2) Gr2 of 22 µm in average particle size and 0.8 m²/g in specific surface area (3) Gr1 : Gr2 = 60 : 40 (Mass Ratio) | | | | | | | | | |

Examples 2-1 to 2-4 produced the result of "no abnormality". On the other hand, Comparative Example 2-2 produced the result of "abnormality" in the nailing test.

The reason why abnormality occurred in the case of the positive electrode excessively containing therein the three-component active material as in Comparative Example 2-2 is because the battery failed to be rapidly discharged to a charging condition without any thermal runaway caused by the three-component active material around the short-circuited portion in the nailing, due to the three-component active material excessively contained in excess of 80 mass%.

As in Comparative Example 2-1, even in the case of meeting the mass of the Mn-based active material : the mass of the three-component active material = 20 : 80 to 80 : 20, the result of "abnormality" was produced in the nailing test when the average particle size of the three-component active material is neither 0.5 µm or more nor 7 µm or less, and also when the average particle size of the first graphite is neither 3 µm or more nor 18 µm or less.

### [Example 3]

### (Examples 3-1 to 3-3)

In Examples 3-1 to 3-3, batteries were prepared in the same way as in Example 1-1, except the three-component active material was used as shown in Table 3, and that the mass ratio between the Mn-based active material and the three-component active material was adjusted to 30 : 70. Table 3 shows the results of the nailing test for the batteries according to Examples 3-1 to 3-3.

**[Table 3]**

| | Three-Component Composition | Positive Active Material | | | Result of Nailing Test |
|---|---|---|---|---|---|
| | | Three Component | | Ratio of Specific Surface Area (Three-Component/ Mn-Based) | |
| | | Average Particle Size (µm) | Specific Surface Area (m²/g) | | |
| Example 3-1 | LlNi_{0.165}Co_{0.67}Mn_{0.165}O₂ | 4 | 1.0 | 5.0 | No Abnormality |
| Example 3-2 | LiN_{i0.67}Co_{0.165}Mn_{0.165}O₂ | 4 | 1.4 | 7.0 | No Abnormality |
| Example 3-3 | LiN_{i0.45}Co_{0.30}Mn_{0.25}O₂ | 4 | 1.2 | 6.0 | No Abnormality |

| | | | | | |
|---|---|---|---|---|---|
| (1) Mn-based composition of LiMn₂O₄, 18 µm in average particle size, and 0.2 m²/g in specific surface area (2) Mn Based : Three Component = 30 : 70 (Mass Ratio) (3) Gr1 of 5 µm in average particle size and 2.2 m²/g in specific surface area (4) Gr2 of 22 µm in average particle size and 0.8 m²/g in specific surface area (5) Gr1 : Gr2 = 60 : 40 (Mass Ratio) | | | | | |

Examples 3-1 to 3-3 produced the result of "no abnormality" in the nailing test. This is believed to be because the battery succeeded in being rapidly discharged to a charging condition without any thermal runaway caused around the short-circuited portion in each of the compositions of the three-component active materials according to Examples 3-1 to 3-3. Further, the inventors of the present application consider that similar effects are produced in the general formula Li_{d}NiₓCo_{y}Mn_{z}M_{α}O₂ (M is at least one element selected from the group consisting of the elements of Groups 2 to 15 in the periodic table of the elements; 0.9 ≤ d ≤ 1.3; x, y, z, and a respectively meets 0 < x <1,0 < y < 1,0 < z < 1,0 < α < 0.3; x + y + z + α = 1), because there is no substantial difference in chemical reactivity and thermal stability.

In addition, although no experimental example is provided, the result of "no abnormality" was also produced in the nailing test, when the composition of the Mn-based active material was adjusted to Li_{1.1}Mn_{1.9}O₄ or LiMn_{1.9}Al_{0.1}O₄. The inventors of the present application consider that similar effects are produced in the general formula LiₐMn₂-_{b}A_{b}O₄ (A is at least one element selected from the group consisting of elements of Groups 2 to 15 in the periodic table of the elements; 0.9 ≤ a ≤ 1.3; 0 ≤ b ≤ 0.3), because there is no substantial difference in chemical reactivity and thermal stability.

### [Example 4]

### (Examples 4-1 to 4-3)

In Examples 4-1 to 4-3, batteries were prepared in the same way as in Example 1-1, except for the use of LiMn₂O₄ and LiNi_{1/3}Co_{1/3}Mn_{1/3}O₂ with the average particle sizes and specific surface areas shown in Table 4. Table 4 shows the results of the nailing test for the batteries according to Examples 4-1 to 4-3.

**[Table 4]**

| | Positive Active Material | | | | | Result of Nailing Test |
|---|---|---|---|---|---|---|
| | Mn Based | | Three Component | | Ratio of Specific Surface Area (Three-Component/ Mn-Based) | |
| | Average Particle Size (µm) | Specific Surface Area (m²/g) | Average Particle Size (µm) | Specific Surface Area (m²/g) | | |
| Example 4-1 | 18 | 0.3 | 4 | 1.1 | 3.7 | No Abnormality |
| Example 4-2 | 18 | 0.5 | 4 | 1.4 | 2.8 | No abnormality (without opening the valve, with 5% or more decrease in weight) |
| Example 4-3 | 18 | 0.2 | 6 | 0.6 | 3.0 | No abnormality (without opening the valve, with 5% or more decrease in weight) |

| | | | | | | |
|---|---|---|---|---|---|---|
| (1) Mn Based : Three Component = 30 : 70 (Mass Ratio) (2) Gr1 of 5 µm in average particle size and 2.2 m²/g in specific surface area (3) Gr2 of 22 µm in average particle size and 0.8 m²/g in specific surface area (4) Gr1 : Gr2 = 60 : 40 (Mass Ratio) | | | | | | |

In Example 4-1, the safety valve was not opened, and the decrease in weight was less than 5% to the total weight of the battery. On the other hand, in Example 4-2 and Example 4-3, the safety valve was not opened, while the decrease in weight was 5% or more to the total weight of the battery. This is believed to be due to the following reason.

More specifically, it is believed that in Example 4-1, the three-component active material succeeded in, with more certainty, more preferentially receiving electrons from the negative electrode 22 side and lithium ions than the Mn-based active material, because the area of contact between the three-component active material and the nonaqueous electrolyte was able to be made substantially larger than the area of contact between the Mn-based active material and the nonaqueous electrolyte. This result has found that not only the occurrence of abnormality but also the occurrence of liquid leakage can be suppressed by making the specific surface area of the three-component active material 3.5 times or more times as large as the specific surface area of the Mn-based active material.

### [Example 5]

### (Examples 5-1 to 5-7 and Comparative Examples 5-1 to 5-2)

In Examples 5-1 to 5-7 and Comparative Examples 5-1 to 5-2, batteries were prepared in the same way as in Example 1-1 mentioned above, except that the positive active material was composed so that the mass ratio between LiMn₂O₄ and LiNi_{1/3}Co_{1/3}Mn_{1/3}O₂ was 10 : 90 to 90 : 10.

### (Measurement of Battery Capacity)

The battery capacity was measured with the use of batteries according to Examples 5-1 to 5-7 and Comparative Examples 5-1 to 5-2. Specifically, constant current constant voltage charge was carried out up to a voltage of 4.1 V at a charge current of 50 A. In this case, the charge time was adjusted to 3 hours in total. This battery was discharged down to an end-of-discharge voltage of 3.0 V at a discharge current of 50 A to measure the discharge capacity. This discharge capacity was multiplied by the average voltage in the case of the discharge at 50 A, and regarded as the "battery capacity".

Table 5 shows the results of measuring the battery capacity for the batteries according to Examples 5-1 to 5-7 and Comparative Examples 5-1 to 5-2.

**[Table 5]**

| | Mn Based : Three Component (Mass Ratio) | Battery Capacity (Wh) |
|---|---|---|
| Comparative Example 5-1 | 90:10 | 185 |
| Example 5-1 | 80:20 | 193 |
| Example 5-2 | 70:30 | 200 |
| Example 5-3 | 60:40 | 208 |
| Example 5-4 | 50:50 | 214 |
| Example 5-5 | 40:60 | 220 |
| Example 5-6 | 30:70 | 225 |
| Example 5-7 | 20:80 | 228 |
| Comparative Example 5-2 | 10:90 | 231 |

Examples 5-1 to 5-7 and Comparative Examples 5-1 to 5-2 succeeded in confirming that the battery capacity is increased by increasing the proportion of the three-component active material in the positive electrode. Now, in consideration of only the battery capacity, Comparative Example 5-2 is most preferred, while Comparative Example 2-2 has "abnormality" in the nailing test. In addition, the case of containing the Mn-based active material in excess of 80 mass% as in Comparative Example 5-1 is considered unfavorable, because the discharge capacity is decreased. Therefore, it is considered preferable for the mass mixing ratio between the Mn-based active material and the three-component active material to meet the mass of the Mn-based active material : the mass of the three-component active material = 20 : 80 to 80 : 20.

It is to be noted that the embodiment and examples disclosed herein should be considered by way of example in all respects, but not limiting. The scope of the present invention is defined by the claims, but not the descriptions of the embodiment and examples, and further intended to encompass all modifications within the spirit and scope equivalent to the claims.

### DESCRIPTION OF REFERENCE SIGNS

- 21: positive electrode
- 22: negative electrode
- 100: battery (nonaqueous electrolyte secondary battery)

## Claims

1. A nonaqueous electrolyte secondary battery comprising:
a positive electrode containing a first positive active material having an average particle size of 12 µm or more and 30 µm or less, the first positive active material represented by a general formula LiₐMn₂-_{b}A_{b}O₄ (A is at least one element selected from the group consisting of the elements of Groups 2 to 15 in the periodic table of the elements; 0.9 ≤ a ≤ 1.3; 0 ≤ b ≤ 0.3), and a second positive active material having an average particle size of 0.5 µm or more and 7 µm or less, the second positive active material represented by a general formula Li_{d}NiₓCo_{y}Mn_{z}M_{α}O₂ (M is at least one element selected from the group consisting of the elements of Groups 2 to 15 in the periodic table of the elements; 0.9 ≤ d ≤ 1.3; x, y, z, and α respectively meets 0 < x < 1, 0 < y < 1, 0 < z < 1, 0 ≤ α ≤ 0.3; x + y + z + α = 1); and
a negative electrode containing 50 mass% or more of a negative active material having an average particle size of 3 µm or more and 18 µm or less to the total mass of the negative active material,
wherein a mass mixing ratio between the first positive active material and the second positive active material meets the mass of the first positive active material : the mass of the second positive active material = 20 : 80 to 80 : 20.

2. The nonaqueous electrolyte secondary battery according to claim 1, wherein the negative electrode contains less than 50 mass% of a negative active material larger than 18 µm in average particle size to a total mass of the negative active material.

3. The nonaqueous electrolyte secondary battery according to claim 1 or 2, wherein a specific surface area of the second positive active material is 3.5 times or more times as large as a specific surface area of the first positive active material.
